(19) Europäisches Patentamt
European Patent Office
Office européen des brevets

(11) **EP 4 191 360 A1**

(12) **EUROPEAN PATENT APPLICATION**
published in accordance with Art. 153(4) EPC

(43) Date of publication:
**07.06.2023 Bulletin 2023/23**

(21) Application number: **21851332.3**

(22) Date of filing: **02.07.2021**

(51) International Patent Classification (IPC):
**G05D 1/02** (2020.01)          **A47L 11/24** (2006.01)
**A47L 11/40** (2006.01)

(86) International application number:
**PCT/CN2021/104331**

(87) International publication number:
**WO 2022/022227 (03.02.2022 Gazette 2022/05)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.07.2020 CN 202010762786**

(71) Applicant: **Beijing Roborock Technology Co., Ltd.
Beijing 100085 (CN)**

(72) Inventors:
- **YU, Mochen
  Beijing 100085 (CN)**
- **DANG, Liang
  Beijing 100085 (CN)**
- **ZHANG, Wei
  Beijing 100085 (CN)**

(74) Representative: **Studio Torta S.p.A.
Via Viotti, 9
10121 Torino (IT)**

(54) **DISTANCE MEASUREMENT DEVICE AND ROBOTIC VACUUM CLEANER**

(57)     The present invention provides a distance measuring device. The distance measuring device is applicable to a sweeping robot and includes a signal source disposed near a front end edge of a bottom surface of the sweeping robot and configured to transmit a cone-shaped detection signal at a preset angle; a first signal receiver disposed at a first position near the signal source and configured to receive a reflected signal of the cone-shaped detection signal reflected by the ground, wherein the first position is a corresponding position when a projected area of the cone-shaped detection signal on the ground is maximum; and a second signal receiver disposed at a second position near the first signal receiver and configured to receive a reflected signal of the cone-shaped detection signal reflected by a cliff surface, wherein the second position is a corresponding position when a projected area of the cone-shaped detection signal on the cliff surface is maximum.

**FIG. 5**

**Description**

**CROSS-REFERENCE TO RELATED APPLICATION**

This application is a national phase of a PCT application under PCT/CN2021/104331, which claims priority to Chinese Patent Application No. 202010762786.6, filed on July 31, 2020.

**TECHNICAL FIELD**

The present disclosure relates to the field of robot control technologies, and in particular relates to a distance measuring device and a sweeping robot.

**BACKGROUND**

Distance measurement of a robot, as an essential procedure in the process of robot traveling, usually includes real-time detection of surrounding obstacles using laser radar and other sensors, as well as detection of the ground status by a cliff sensor to avoid dropping into a cliff and as a result causing a machine failure. Currently, most sweepers use low-cost infrared emitting and receiving diodes as cliff detection modules, and a few other sweepers use distance sensors as cliff detection modules.

The infrared emitting and receiving diodes are simple in design and low in cost, but susceptible to materials. Different materials have different trigger heights, which may cause an original cliff to be mistakenly detected as a flat ground, or cause the cliff sensor to be triggered in case of an original flat ground. Meanwhile, the infrared emitting and receiving diodes are also susceptible to indoor lighting and sunlight, resulting in a misjudgment. A distance sensor usually consists of three parts: a position sensitive detector (PSD), an infrared emitting diode (IRED) and a signal processing circuit, and due to measurement by the triangulation method, the measurement accuracy of the sensor will not be adversely affected by the material of a measured object, the ambient temperature and the measurement time. However, this solution is complex in circuit structure and relatively high in cost.

**SUMMARY**

In view of this, the present invention provides a distance measuring device, and a sweeping robot which uses the low-cost distance measuring device for cliff detection while ensuring the accuracy of detection.

The present invention provides a distance measuring device. The distance measuring device is applicable to a sweeping robot and includes a signal source disposed near a front end edge of a bottom surface of the sweeping robot and configured to transmit a cone-shaped detection signal at a preset angle; a first signal receiver disposed at a first position near the signal source and configured to receive a reflected signal of the cone-shaped detection signal reflected by the ground, wherein the first position is a corresponding position when a projected area of the cone-shaped detection signal on the ground is maximum; and a second signal receiver disposed at a second position near the first signal receiver and configured to receive a reflected signal of the cone-shaped detection signal reflected by a cliff surface, wherein the second position is a corresponding position when a projected area of the cone-shaped detection signal on the cliff surface is maximum.

Optionally, there is a plurality of second signal receivers discretely disposed around the first signal receiver and configured to receive reflected signals of the cone-shaped detection signal reflected by cliff surfaces of different depths.

Optionally, a shielding structure is disposed between the first signal receiver and the second signal receiver, or a shielding structure is disposed between each two of the plurality of second signal receivers.

Optionally, the distance measuring device further includes a computing device configured to receive the reflected signals received by the first signal receiver and the second signal receiver, compute a signal intensity ratio of the reflected signals received by the first signal receiver and the second signal receiver, and determine a status of the ground according to the signal intensity ratio.

Optionally, the signal source includes at least one of an infrared signal source, a laser signal source, and an ultrasonic signal source; and the cone-shaped detection signal includes at least one of infrared light, laser, and ultrasonic waves.

Optionally, the signal intensity ratio is a light intensity ratio or an acoustic wave intensity ratio.

Optionally, said determining the status of the ground according to the signal intensity ratio includes: determining that the ground is a slope in response to the signal intensity ratio being continuously variable; and determining that the ground is a cliff in response to the signal intensity ratio being variable by leaps and bounds.

Optionally, a distance between the signal source and the ground is a fixed value ranging from 1 cm to 2 cm.

Optionally, the first position is a fixed value ranging from 11 cm to 14 cm.

Optionally, the preset angle is adjustable within a range of 10° to 15°.

Optionally, the projected area of the cone-shaped detection signal on the cliff surface is larger than the projected area of the cone-shaped detection signal on the ground.

The present invention provides a sweeping robot, including any one of the distance measuring devices described as above.

## BRIEF DESCRIPTION OF THE DRAWINGS

For clearer descriptions of the technical solutions in the embodiments of the present disclosure or in the prior art, the following briefly introduces the accompanying drawings required for describing the embodiments or the prior art. Apparently, the accompanying drawings in the following description show merely some embodiments of the present disclosure, and a person of ordinary skill in the art may still derive other drawings from these accompanying drawings without creative efforts.

FIG. 1A is a schematic diagram of an application scenario according to an embodiment of the present disclosure;

FIG. 2 is a three-dimensional diagram of a structure of a sweeping robot according to an embodiment of the present disclosure;

FIG. 3 a top view of the structure of the sweeping robot according to the embodiment of the present disclosure;

FIG. 4 is a bottom view of the structure of the sweeping robot according to the embodiment of the present disclosure;

FIG. 5 is a schematic diagram showing a detection principle of a distance measuring device according to an embodiment of the present disclosure;

FIG. 6 is a schematic structural diagram of a distance measuring device according to the embodiment of the present disclosure; and

FIG. 7 is a schematic diagram showing a computation principle of the distance measuring device according to the embodiment of the present disclosure.

## DETAILED DESCRIPTION

For clearer descriptions of the objectives, technical solutions, and advantages of the present disclosure, the technical solutions of the embodiments of the present disclosure are described clearly and completely below with reference to the accompanying drawings in the embodiments of the present disclosure. Apparently, the described embodiments are merely a part of the embodiments of the present disclosure, rather than all of the embodiments of the present disclosure. According to the described embodiments of the present disclosure, all of the other embodiments obtained by a person of ordinary skill in the art without any creative efforts shall fall within the protection scope of the present disclosure.

It should be understood that although the terms first, second, third, etc. may be used in the embodiments of the present disclosure to describe certain objects, these objects should not be limited by these terms. These terms are merely used to distinguish the objects from each other. For example, a first object may also be referred to as a second object, and similarly, a second object may also be referred to as a first object, without departing from the scope of the embodiments of the present disclosure.

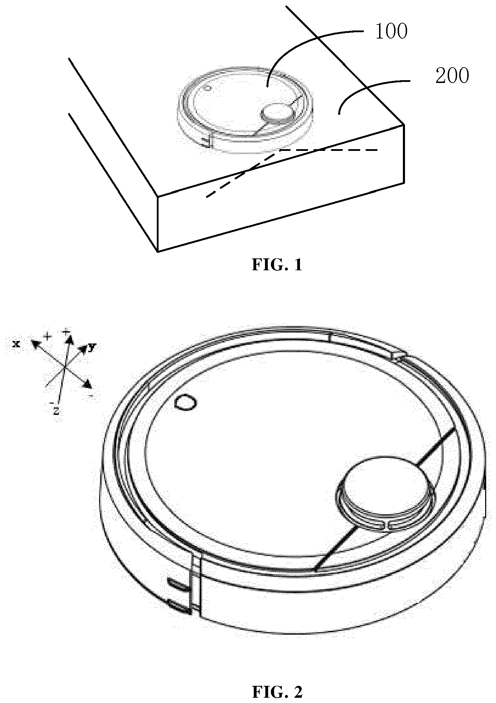

An embodiment of the present disclosure provides a possible application scenario that includes an automatic cleaning apparatus 100, such as a sweeping robot, a mopping robot, a vacuum cleaner and a lawn mower. In this embodiment, as shown in FIG. 1, by taking a household sweeping robot as an example for explanation, the status of a pavement 200 needs to be detected in real time during operation of the sweeping robot, for example, there may be a step, a slope, and other uneven planes, and at this time, the sweeping robot may detect the pavement ahead by a self-carried cliff detector and receive an exact feedback from the cliff detector to avoid dropping into a cliff. In this embodiment, the robot may be provided with a touch sensitive display or controlled by a mobile terminal to receive an operation instruction input by a user. The automatic cleaning apparatus may be provided with various sensors, such as a buffer, the cliff sensor, an ultrasonic sensor, an infrared sensor, a magnetometer, an accelerometer, a gyroscope, an odograph, and other sensing devices. The robot may also be provided with wireless communication modules, such as a WiFi module and a Bluetooth module, so as to be connected to an intelligent terminal or a server and to receive the operation instruction transmitted by the intelligent terminal or the server via the wireless communication modules.

As shown in FIG. 2, the automatic cleaning apparatus 100 may travel on the ground by various combinations of movements of the following three axes, which are perpendicular to one another and defined relative to a main body 110: a front and rear axis X, a transverse axis Y, and a central vertical axis Z. A forward driving direction along the front and rear axis X is designated as "forward" and a rearward driving direction along the front and rear axis X is designated "rearward". The transverse axis X extends substantially between a right wheel and a left wheel of the robot along an axis defined by a center point of a driving wheel module 141.

The automatic cleaning apparatus 100 may rotate about the axis Y. It is called "pitch up" when the automatic cleaning apparatus 100 has its forward portion tilted upward and its rearward portion tilted downward, and it is called "pitch down" when the automatic cleaning apparatus 100 has its forward portion tilted downward and its rearward portion tilted upward. In addition, the robot 100 may rotate about the axis Z. In a forward direction of the automatic cleaning apparatus 100, it is called "turn right" when the automatic cleaning apparatus 100 is tilted towards the right side of the axis X, and it is called "turn left" when the automatic cleaning apparatus 100 is tilted towards the left side of the axis X.

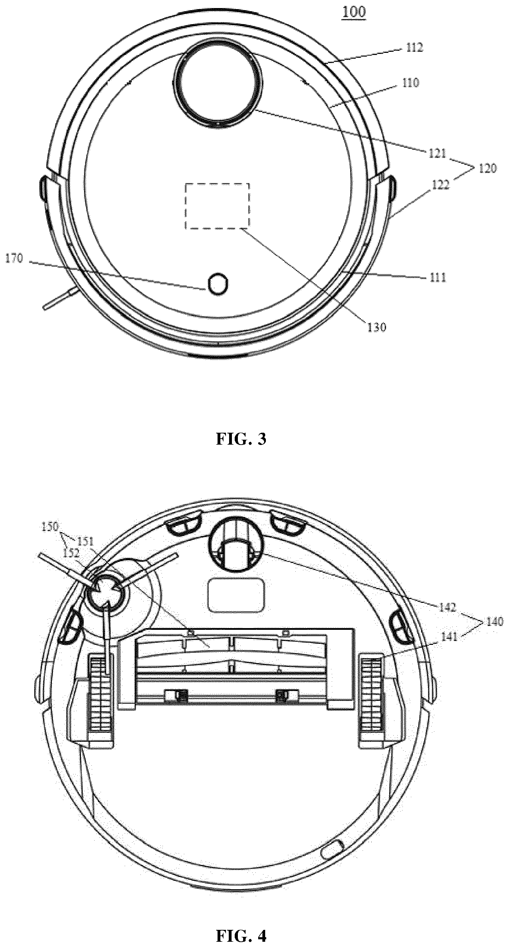

As shown in FIG. 3, the automatic cleaning apparatus 100 includes a main body 110, a perception system 120, a control system, a driving system 140, a cleaning system, an energy system, and a human-machine interaction system 180.

The main body 110 includes a forward portion 111 and a rearward portion 112, is approximately circular (being circular in front and rear), and may also be in other shapes including, but not limited to, an approximately D shape with a square front and a circular rear and a rectangular or square shape with a square front and a square rear.

As shown in FIG. 3, the perception system 120 includes a position determining device 121 located on the main body 110, a collision sensor and a proximity sensor both disposed on a buffer 122 of the forward portion 111 of the apparatus body 110, a cliff sensor disposed at a lower portion of the main body 110, a magnetometer, an accelerometer, a gyroscope (Gyro), and an odograph (ODO) disposed inside the apparatus body, and other sensing devices, for providing various position information and motion status information of the automatic cleaning apparatus to the control system 130. The position determining device 121 includes, but is not limited to, a camera and a laser distance sensor (LDS).

As shown in FIG. 3, the forward portion 111 of the main body 110 may carry the buffer 122. The buffer 122 detects one or more events in a travel path of the automatic cleaning apparatus 100 via a sensor system (such as an infrared sensor) disposed thereon when the driving wheel module 141 propels the robot to travel on the ground in the process of cleaning. The automatic cleaning apparatus 100 may control, based on the events (such as an obstacle and a wall) detected by the buffer 122, the driving wheel module 141. In this way, the automatic cleaning apparatus 100 responds to the events, e.g., moving away from the obstacle.

The control system 130 is disposed on a main circuit board within the main body 110 and includes a computing processor, such as a central processing unit and an application processor, in communication with a non-transitory memory, such as a hard disk, a flash memory and a random-access memory. The application processor is configured to draw a simultaneous map of an environment where the robot is located based on obstacle information fed back by the laser distance sensor by use of a positioning algorithm, for example, simultaneous localization and mapping (SLAM). In addition, based on the distance and speed information fed back by the sensors disposed on the buffer 122, the cliff sensor, the magnetometer, the accelerometer, the gyroscope, the odograph, and other sensing devices, a comprehensive judgment may be made on a current working status and a current position of the sweeper, as well as a current posture of the sweeper, such as crossing a doorsill, getting on a carpet, at a cliff, being stuck from above or below, having a full dust box, being picked up, etc. For different cases, specific next action strategies may be provided such that the operation of the robot is more in line with the requirements of an owner, thereby providing better user experience.

As shown in FIG. 4, the driving system 140 may control the robot 100 to travel across the ground based on a driving command with distance and angle information (e.g., x, y, and θ components). The driving system 140 includes the driving wheel module 141 that may control both of the left wheel and the right wheel simultaneously. For more precise control of the apparatus's movement, the driving wheel module 141 preferably includes a left driving wheel module and a right driving wheel module, which are arranged opposite to each other along the transverse axis defined by the. The robot may include one or more driven wheels 142, which include but are not limited to universal wheels, in order to move more stably or have a better movement ability on the ground. The driving wheel module includes a travelling wheel, a driving motor, and a control circuit for controlling the driving motor, and may also be connected to a circuit for measuring a driving current and an odograph. The driving wheel module 141 may be detachably connected to the main body 110 to facilitate disassembly, assembly and maintenance. The driving wheel may be provided with an offset drop suspension system, which is fastened movably to (e.g., attached rotatably to) the main body 110, and receives a spring offset biased downward and away from the main body 110. The spring offset allows the driving wheel to maintain contact and traction with the ground with a certain landing force, while cleaning elements of the automatic cleaning apparatus 100 are also in contact with the ground 10 with certain pressure.

The cleaning system may be a dry cleaning system and/or a wet cleaning system. As the dry cleaning system, main cleaning functions are achieved by a sweeping system 151 consisting of a rolling brush, a dust box, a fan, an air outlet, and connecting parts among the four. The rolling brush having certain interference with the ground sweeps up garbage on the ground and rolls the garbage up to the front of a dust suction port between the rolling brush and the dust box, and after that the garbage is sucked into the dust box by a gas which has a sucking force, is generated by the fan and passes through the dust box. The dry cleaning system may further include a side brush 152 having a rotating axis, and the rotating axis is angled relative to the ground for moving debris into a rolling brush area of the cleaning system.

The energy system includes a rechargeable battery, such as a Ni-MH battery and a lithium battery. The rechargeable battery may be connected to a charging control circuit, a battery pack charging temperature detecting circuit, and a battery undervoltage monitoring circuit which are then connected to a single chip microcomputer control circuit. A host is connected to a charging pile through a charging electrode disposed on one side or below the apparatus body for charging. If the exposed charging electrode is covered with dust, a plastic body around the electrode will be melted and deformed due to an accumulative effect of charges in the process of charging, and even the electrode itself will be deformed, making it impossible to continue to normally charging the automatic cleaning apparatus.

The human-computer interaction system 180 includes buttons on a panel of the host for the user to select functions, and may further include a display screen and/or an indicator light and/or a speaker, as well as a mobile phone client program. The display, the indicator light and the speaker show the user the current status or function options of the automatic cleaning apparatus. For a route navigation type automatic cleaning apparatus, a mobile phone client may show the user a map of the environment where the apparatus is located, as well as a position of the apparatus, thereby providing the user with richer and more user-friendly function items.

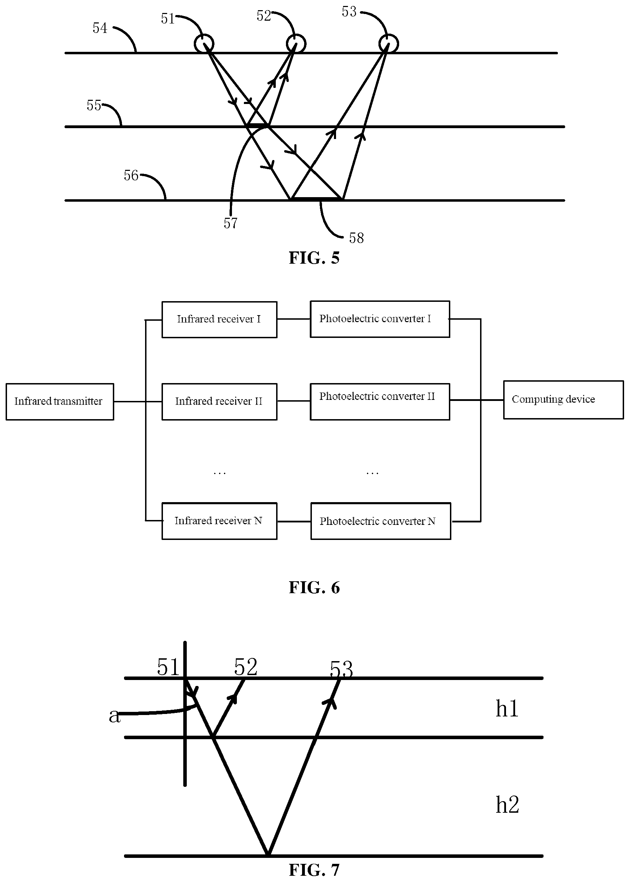

An embodiment of the present disclosure provides a distance measuring device applicable to a sweeping robot as shown in FIG. 5. A sensor used in the distance measuring device may be an infrared sensor, an ultrasonic sensor, a laser sensor, or the like, which is not limited because the sensors that can meet the requirements of the present embodiment fall within the scope of protection of the present disclosure. As an example, a cliff sensor provided by the embodiment of the present disclosure is illustrated by a solution of an infrared emitting and receiving diode, of which the basic working process is described as below. An infrared emitting light source irradiates infrared light to the ground at a certain angle, and an infrared receiving device computes the height from the ground according to the energy of the infrared light reflected back from the ground, so as to determine whether to trigger the cliff sensor or not. The specific solution is described as below.

An embodiment of the present disclosure provides an infrared distance measuring device. The infrared distance measuring device is applicable to a sweeping robot as shown in FIG. 5 and includes an infrared light source 51, a first infrared detector 52 and a second infrared detector 53.

The infrared light source 51 is disposed near a front end edge of a bottom surface 54 of the sweeping robot 100 to facilitate detection of the status in front of the ground 55. The infrared light source emits cone-shaped infrared detection light at a preset angle; the preset angle is adjustable; and the angle range of the infrared light source is usually adjusted within the range of 10° to 15° by adjusting a diaphragm in front of the infrared light source. The infrared light source 51 emits light as a cone-shaped light source, and the light is reflected after being irradiated onto the ground 55. According to different materials of the ground, the reflected light is slightly different in intensity and angle range. For example, a smooth marble floor has high reflectivity, the light source is excellent in directionality, and the reflected light received by a receiver is high in energy; while surfaces such as a carpet have low reflectivity, and the reflected light received by the receiver is low in energy. Optionally, the distance between the infrared light source 51 and the ground is a fixed value ranging from 1 cm to 2 cm.

The first infrared detector 52 is disposed at a first position near the infrared light source 51 and configured to receive reflected light of the infrared detection light reflected by the ground. The first position is a corresponding position when a projected area 57 of the cone-shaped infrared detection light on the ground is maximum. The unevenness of the ground 55 causes the heights of the infrared light source 51 from the ground to be different, such that the projected area 57 of the cone-shaped infrared detection light on the ground also changes correspondingly. The position of the first infrared detector 52 determined when the projected area is maximum, i.e., when the infrared light source 51 is farthest from the ground, is the first position, and the energy of the reflected light at the first position at this time is correspondingly the weakest (the longer the distance of travel is, the weaker the light energy is). If the first infrared detector 52 located at the first position can still receive the reflected light, the reflected light can be inevitably received when the robot travels on any flat ground. Therefore, the first position at this time is the best position for the first infrared detector 52 to receive the reflected light. Since the reflected light from any ground can be received, subsequent comparison and computation of the light energy are facilitated, and further the position of the cliff can be determined. Optionally, the distance between the infrared light source 51 and the first infrared detector 52 at the first position, ranges from 11 cm to 14 cm.

The second infrared detector 53 is disposed at a second position near the first infrared detector 52 and configured to receive reflected light of the infrared detection light reflected by a cliff surface. The second position is a corresponding position when a projected area of the cone-shaped infrared detection light on the cliff surface is maximum. Similarly, the unevenness of the cliff surface 56 causes the heights of the infrared light source 51 from the cliff surface to be different. The position of the second infrared detector 53 determined when the projected area is maximum, i.e., when the infrared light source 51 is farthest from the cliff surface, is the second position, and the energy of the reflected light at the second position at this time is correspondingly the weakest (the longer the distance of travel is, the weaker the light energy is). If the second infrared detector 53 located at the second position can still receive the reflected light, the reflected light can be inevitably received when the robot travels on any flat ground. Therefore, the second position at this time is the best position for the second infrared detector 53 to receive the reflected light. Since the reflected light from any ground can be received, subsequent comparison and computation of the light energy are facilitated, and further the position of the cliff can be determined. The distance between the second infrared detector 53 at the second position and the first infrared detector 52 ranges from 3 cm to 5 cm.

According to the settings of the positions of the first infrared detector 52 and the second infrared detector 53, when the sweeping robot travels on the flat ground normally, due to accurate selection of the first position, light emitted by the infrared light source 51 may be received by the first infrared detector 52 in real time, and thus the problem that the first infrared detector 52 receives no reflected light due to the uneven ground does not exist. When the first infrared detector 52 suddenly receives no reflected light, it means that there is a cliff ahead, and at this time, it can be seen that the second infrared detector 53 has already received a signal. The second infrared detector 53 is located at the accurately computed second position, and thus can accurately receive light signals reflected by the step and the cliff.

Based on the designs of the positions of the first infrared detector 52 and the second infrared detector 53, upon determining that the first infrared detector 52 receives no light signal, and the second infrared detector 53 receives a light signal, it is determined that there is a cliff ahead, and at this time the driving device may be told to stop moving forward so as to avoid dropping into the cliff.

As another optional embodiment, there is a plurality of second infrared detectors discretely disposed around the first infrared detector and configured to receive reflected signals of the infrared detection light reflected by cliff surfaces of different depths. For example, a second second infrared detector 53 is included, by which cliffs of different depths may be detected. According to the principles of geometrical optics, the first second infrared detectors 52 may detect the position of the cliff of a certain depth, and the second second infrared detector 53 farther from the infrared light source 51 may detect the position of the cliff of a greater depth. Similarly, more second infrared detectors disposed side by side may detect cliffs of different depths, for example, detect steps more accurately. Similarly, the installation positions of the plurality of second infrared detectors are determined based on the maximum projected area so as to ensure that cliffs of different depths may be accurately acquired. The plurality of second infrared detectors may be disposed at equal intervals of 3-5 mm.

As another optional embodiment, a shielding structure is disposed between the first infrared detector and the second infrared detector, or a shielding structure is disposed between each two of the plurality of second infrared detectors. The shielding structure includes, but is not limited to, a shielding piece, a shielding block, and the like. The shielding structure is configured to shield the interference of light between the infrared detectors, such that the light energy received by each detector is more accurate.

As another optional embodiment, as shown in FIG. 6, the infrared distance measuring device further includes a computing device configured to receive, by a photoelectric conversion unit, energy signals of the reflected light received by the first infrared detector and the second infrared detector, compute an energy ratio of the reflected light received by the first infrared detector and the second infrared detector and determine a status of the ground according to the ratio. The ground is a slope if the ratio is continuously variable; and the ground is a cliff if the ratio is variable by leaps and bounds.

Specifically, during normal traveling, the energy value of the reflected light received by the first infrared detector is I. When I suddenly drops to 0, it means that there is a cliff ahead. When I does not drop to 0 but drops to 0.6I suddenly, it means that at this time, a light spot moves toward the second infrared detector. When the energy value of the reflected light received by the second infrared detector at this time is 0.4I, it means that there is a slope ahead.

As shown in FIG. 7, according to the height h1 between the detector and the ground, the energy value I1 of the light reflected by the normal ground and received by the first infrared detectors, and the energy value I2 of the light reflected by the cliff surface and received by the second infrared detector, assuming that the light reflectivity of the ground is the same, the signal intensity is inversely proportional to the distance, and the depth h2 of the cliff may be worked out by the following formula:

$$h2 = (I1/I2 - 1)h1.$$

As another computation method, when both of the first infrared detector and the second infrared detector receive signals to meet detection principles of different heights, the depth h2 of the cliff may be worked out by the following formula according to the height h1 between the detector and the ground, a signal emission angle a, the distance a1 between the first infrared detector and the signal source, and the distance a2 between the second infrared detector and the signal source:

$$h2 = (a2/a1 - 1)h1$$

As an alternative embodiment, the present disclosure provides a sweeping robot. The sweeping robot includes a main body 110, a perception system 120, a control system 130, a driving system 140, a cleaning system 151, an energy system, and a human-computer interaction system 180. The perception system 120 includes any one of the infrared distance measuring devices described as above.

In the infrared distance measuring device according to the embodiment of the present disclosure, on the basis of still using the low-cost infrared emitting and receiving diodes, by reasonably computing the positions of the receiving diodes, using at least two receiving diodes with different receiving angles to receive infrared light energy, determining the position of the cliff, and measuring the distance based on the proportional value of the received infrared light energy, the depth of the cliff is determined accurately. Thus, the impact from different materials on the measurement accuracy is reduced and the device cost is lowered.

The block diagrams in the drawings illustrate architecture, functions and operations that may be implemented based on the system and method according to the embodiments of the present disclosure. In this regard, each block of the block diagrams can represent a module, and the module includes one or more executable instructions for implementing specific logic functions. It should also be noted that, in some alternative implementations, the functions noted in the blocks may also occur in a sequence different from those illustrated in the drawings. For example, two consecutive blocks may be executed substantially in parallel, and may sometimes be executed in the opposite order, depending on the functions involved. It is also noted that each block of the block diagrams, and combinations of the blocks in the block diagrams can be implemented by a dedicated hardware-based system that performs the specified functions or operations, or can be implemented by a combination of dedicated hardware.

The device embodiments described above are merely illustrative. The units described as separate components may or may not be physically separate, and the components displayed as units may or may not be physical units, i.e., may be located at one place, or may be distributed to multiple network modules. Some or all of the modules may be selected according to actual needs to achieve the purpose of the embodiment solutions, which can be understood and implemented by those of ordinary skill in the art without any creative effort.

At last, it shall be noted that the above embodiments are only used to illustrate, instead of limiting, the technical solutions of the present disclosure. Although the present disclosure is described in detail with reference to the foregoing embodiments, those of ordinary skill in the art shall understand that they can still modify the technical solutions described in the foregoing embodiments, or make equivalent substitutions for some of the technical features; and these modifications or substitutions do not deviate the nature of the corresponding technical solutions from the spirit and scope of the technical solutions of the embodiments of the present disclosure.

**Claims**

1. A distance measuring device, being applicable to a sweeping robot and comprising:

    a signal source disposed near a front end edge of a bottom surface of the sweeping robot and configured to transmit a cone-shaped detection signal at a preset angle;
    a first signal receiver disposed at a first position near the signal source and configured to receive a reflected signal of the cone-shaped detection signal reflected by the ground, wherein the first position is a corresponding position when a projected area of the cone-shaped detection signal on the ground is maximum; and
a second signal receiver disposed at a second position near the first signal receiver and configured to receive a reflected signal of the cone-shaped detection signal reflected by a cliff surface, wherein the second position is a corresponding position when a projected area of the cone-shaped detection signal on the cliff surface is maximum.

2. The distance measuring device according to claim 1, wherein there is a plurality of second signal receivers discretely disposed around the first signal receiver and configured to receive reflected signals of the cone-shaped detection signal reflected by cliff surfaces of different depths respectively.

3. The distance measuring device according to claim 1 or 2, wherein a shielding structure is disposed between the first signal receiver and the second signal receiver, or a shielding structure is disposed between each two of the plurality of second signal receivers.

4. The distance measuring device according to claim 1, further comprising a computing device configured to receive the reflected signals received by the first signal receiver and the second signal receiver, compute a signal intensity ratio of the reflected signals received by the first signal receiver and the second signal receiver, and determine a status of the ground according to the signal intensity ratio.

5. The distance measuring device according to claim 4, wherein the signal source includes at least one of an infrared signal source, a laser signal source, and an ultrasonic signal source; and the cone-shaped detection signal comprises at least one of infrared light, laser, and ultrasonic waves.

6. The distance measuring device according to claim 5, wherein the signal intensity ratio is a light intensity ratio or an acoustic wave intensity ratio.

7. The distance measuring device according to claim 4, wherein said determining the status of the ground according to the signal intensity ratio comprises: determining that the ground is a slope when the signal intensity ratio is continuously variable; and determining that the ground is a cliff when the signal intensity ratio is variable by leaps and bounds.

8. The distance measuring device according to claim 1, wherein a distance between the signal source and the ground is a fixed value ranging from 1 cm to 2 cm.

9. The distance measuring device according to claim 1, wherein the first position is a fixed value ranging from 11 cm to 14 cm.

10. The distance measuring device according to claim 1, wherein the preset angle is adjustable within a range of 10° to 15°.

11. The distance measuring device according to claim 1, wherein the projected area of the cone-shaped detection signal on the cliff surface is larger than the projected area of the cone-shaped detection signal on the ground.

12. A sweeping robot, comprising the distance measuring device according to any one of claims 1 to 11.

FIG. 1

FIG. 2

**FIG. 3**

**FIG. 4**

**FIG. 5**

**FIG. 6**

**FIG. 7**

### INTERNATIONAL SEARCH REPORT

| | International application No. |
|---|---|
| | **PCT/CN2021/104331** |

**A.    CLASSIFICATION OF SUBJECT MATTER**

G05D 1/02(2020.01)i;   A47L 11/24(2006.01)i;   A47L 11/40(2006.01)i

According to International Patent Classification (IPC) or to both national classification and IPC

**B.    FIELDS SEARCHED**

Minimum documentation searched (classification system followed by classification symbols)

G05D A47L

Documentation searched other than minimum documentation to the extent that such documents are included in the fields searched

Electronic data base consulted during the international search (name of data base and, where practicable, search terms used)

CNABS; CNTXT; CNKI; VEN; WOTXT; EPTXT; USTXT: 距离, 检测, 探测, 地板, 地面, 悬崖, 台阶, 楼梯, 坡, 凹, 发射, 反射, 强度, 光强, 接收, 第一, 第二, 面积, 临界, 高度, 深度, 红外, 激光, 声波, 机器人, robot, distance, height, detect+, ground, floor, cliff, steep, slope, stair?, emit+, reflect+, IR, laser

**C.    DOCUMENTS CONSIDERED TO BE RELEVANT**

| Category* | Citation of document, with indication, where appropriate, of the relevant passages | Relevant to claim No. |
|---|---|---|
| PX | CN 111857153 A (BEIJING STONE CENTURY TECHNOLOGY CO., LTD.) 30 October 2020 (2020-10-30)<br>description, paragraphs [0004]-[0057], and figures 1-7 | 1-12 |
| X | CN 104245244 A (IROBOT CORPORATION) 24 December 2014 (2014-12-24)<br>description paragraphs [0042]-[0130], figures 1-13H | 1-12 |
| A | CN 109602341 A (ZHUHAI AMICRO SEMICONDUCTOR CO., LTD.) 12 April 2019 (2019-04-12)<br>entire document | 1-12 |
| A | CN 111142543 A (ZHUHAI AMICRO SEMICONDUCTOR CO., LTD.) 12 May 2020 (2020-05-12)<br>entire document | 1-12 |
| A | KR 20090019480 A (ACEROBOT CO., LTD.) 25 February 2009 (2009-02-25)<br>entire document | 1-12 |

☐ Further documents are listed in the continuation of Box C.    ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **10 September 2021** | **23 September 2021** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.

**PCT/CN2021/104331**

| Patent document cited in search report | | | Publication date (day/month/year) | Patent family member(s) | | | Publication date (day/month/year) |
|---|---|---|---|---|---|---|---|
| CN | 111857153 | A | 30 October 2020 | None | | | |
| CN | 104245244 | A | 24 December 2014 | CA | 2868860 | C | 24 April 2018 |
| | | | | EP | 2834048 | A4 | 20 May 2015 |
| | | | | JP | 2016076248 | A | 12 May 2016 |
| | | | | JP | 2015517162 | A | 18 June 2015 |
| | | | | JP | 6675373 | B2 | 01 April 2020 |
| | | | | ES | 2656899 | T3 | 28 February 2018 |
| | | | | CA | 2868860 | A1 | 27 March 2014 |
| | | | | EP | 2834048 | B1 | 01 November 2017 |
| | | | | WO | 2014047557 | A1 | 27 March 2014 |
| | | | | JP | 5885147 | B2 | 15 March 2016 |
| | | | | JP | 6250617 | B2 | 20 December 2017 |
| | | | | EP | 3287242 | A1 | 28 February 2018 |
| | | | | CN | 104245244 | B | 20 January 2016 |
| | | | | AU | 2013317738 | B2 | 07 May 2015 |
| | | | | JP | 2018028947 | A | 22 February 2018 |
| | | | | US | 2014088761 | A1 | 27 March 2014 |
| | | | | CN | 105404298 | B | 16 October 2018 |
| | | | | US | 8862271 | B2 | 14 October 2014 |
| | | | | EP | 2834048 | A1 | 11 February 2015 |
| | | | | AU | 2013317738 | A1 | 16 October 2014 |
| | | | | CN | 105404298 | A | 16 March 2016 |
| | | | | AU | 2016225774 | C1 | 16 May 2019 |
| | | | | AU | 2016225774 | B2 | 21 February 2019 |
| | | | | AU | 2015201973 | B2 | 21 July 2016 |
| | | | | AU | 2015201973 | A1 | 07 May 2015 |
| | | | | AU | 2016225774 | A1 | 22 September 2016 |
| CN | 109602341 | A | 12 April 2019 | CN | 109602341 | B | 15 September 2020 |
| CN | 111142543 | A | 12 May 2020 | CN | 211979503 | U | 20 November 2020 |
| KR | 20090019480 | A | 25 February 2009 | None | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2021104331 W

- CN 202010762786